# EUROPEAN PATENT APPLICATION

(11) **EP 4 804 092 A1**
(43) Date of publication of application: **09.09.2026**
(21) Application number: 24915723.1
(22) Date of filing: 25.12.2024
(51) Int. Cl.: G06Q 10/087, G06Q 10/08, G06Q 50/04, B65G 63/00, C21B 5/00

(54) **PHYSICAL DISTRIBUTION SIMULATOR DEVICE, METHOD FOR CREATING OPERATION PLAN, PROGRAM, AND METHOD FOR OPERATING IRON MILL**

(30) Priority: 04.01.2024 JP 2024000271
(71) Applicant: JFE Steel Corporation, Tokyo 100-0011 (JP)
(72) Inventor: KUMANO Akira, Tokyo 100-0011 (JP); YAMAMOTO Shun, Tokyo 100-0011 (JP)
(74) Representative: Scott, Stephen John
(86) International application number: PCT/JP2024/046030
(87) International publication number: WO 2025/146800

(57) **Abstract**

A logistics simulator device includes an input information acquisition module (301), a controller module (309) that executes simulations, a route module (310) that searches for transportable routes, and a simulation result output module (311) that outputs an inventory trends and job results acquired at discrete time intervals. The logistics simulator device includes, as optional components each provided with on/off control, an incoming port module (302), an incoming lot inventory management module (303), a processing material inventory site module (304), an inventory management module for processing material inventory sites (305), a processing equipment inventory site module (306), a processing equipment bin-type inventory site module (307), and a processing equipment module (308).

## Description

### TECHNICAL FIELD

The present disclosure relates to a logistics simulator device, a method of creating an operation plan, a program, and a method of operating a steelworks.

### BACKGROUND

In the transportation operations of processing materials and the like, technology is being developed to improve efficiency by conducting simulations, with operation plans, equipment capacity, and the like as input, and reflecting the results in operations.

For example, Patent Literature (PTL) 1 discloses a simulation program generation device that reduces the burden on designers when creating a simulation program that simulates the operation of each device in a production plant, the movement of processed items, and process phenomena. Furthermore, PTL 2 recites that the logistics of sending raw materials to the subsequent process can be reproduced and visualized using a logistics simulator device, inventory trends can be displayed, and the feasibility of operations can be determined, thereby enabling refinement of plans and improvement of operations.

### CITATION LIST

### Patent Literature

PTL 1: JP 6468000 B2
PTL 2: JP 2023-118069 A

### SUMMARY

### (Technical Problem)

Here, the method described in PTL 1 is directed to simulation of a processing process involving specific physical phenomena, and lacks the perspective of logistics, which takes into account the transportation and movement of processing materials between processes. The method described in PTL 2 addresses the logistics of processing materials, but when applied to a wide variety of layouts and prerequisite conditions, modifications tailored to each case are required.

An object of the present disclosure, made in view of the above-described problems, is to provide a logistics simulator device, a method of creating an operation plan, a program, and an efficient method of operating a steelworks that can accommodate a wide variety of layouts and preconditions.

### (Solution to Problem)

(1) A logistics simulator device according to an embodiment of the present disclosure is
   a logistics simulator device that simulates logistics for transporting materials to a subsequent process, the logistics simulator device including:
   an input information acquisition module configured to acquire an equipment list, an incoming plan, inventory information, a material processing plan, an equipment capacity, and a start date and time, end date and time, and unit time of a simulation;
   a controller module configured to execute the simulation according to the start date and time, the end date and time, and the unit time of the simulation;
   a route module configured to connect facility elements in the simulation and search for a transportable route based on the equipment list and the equipment capacity; and
   a simulation result output module configured to output inventory trends and job results acquired at discrete time intervals, wherein
   the logistics simulator device further includes, as optional components each provided with on/off control, an incoming port module, an incoming lot inventory management module, a processing material inventory site module, an inventory management module for processing material inventory sites, a processing equipment inventory site module, a processing equipment bin-type inventory site module, and a processing equipment module,
   the incoming port module is configured to generate one or more incoming ports and one or more incoming lots for processing materials according to the equipment list and the incoming plan,
   the incoming lot inventory management module is configured to generate a receiving job for one or more types of processing materials to be received in a processing material inventory site,
   the processing material inventory site module is configured to generate one or more processing material inventory sites according to the equipment list,
   the inventory management module for processing material inventory sites is configured to generate one or more processing material inventory site bins by brand within each processing material inventory site based on the inventory information, and increase or decrease inventory in the processing material inventory site bins,
   the processing equipment inventory site module is configured to generate two or more processing equipment inventory sites based on the equipment list, and increase or decrease inventory in the processing equipment inventory sites based on the material processing plan,
   the processing equipment bin-type inventory site module is configured to generate one or more processing equipment bin-type warehouses, which are collections of a plurality of bins, based on the equipment list, and consume or increase inventory in the processing equipment bin-type warehouses, and
   the processing equipment module is configured to generate processing equipment based on the equipment list and to process material in the simulation using the processing equipment according to the material processing plan.
(2) As an embodiment of the present disclosure, in (1),
   the on/off control is set based on input data acquired by the input information acquisition module to enable automatic setting of the facility elements.
(3) As an embodiment of the present disclosure, in (1) or (2),
   the incoming lot inventory management module is configured to generate the incoming lots based on a predetermined rule in a case in which no incoming plan is provided.
(4) As an embodiment of the present disclosure, in any one of (1) to (3),
   the two or more processing equipment inventory sites are sets of beds, and when one of the beds has been emptied, reclaiming is performed from a stacked bed, and stacking begins on the emptied bed.
(5) As an embodiment of the present disclosure, in any one of (1) to (4),
   the inventory management module for processing material inventory sites is configured to interrupt a job in a case in which the inventory in the processing material inventory site bin becomes full or insufficient during execution of the job, select another processing material inventory site bin according to a predetermined rule, and resume the job.
(6) As an embodiment of the present disclosure, in any one of (1) to (5),
   the input information acquisition module is configured to acquire an equipment shutdown plan, and
   the controller module is configured to shut down corresponding equipment when a simulator discrete time reaches a time of equipment shutdown, based on the equipment shutdown plan.
(7) As an embodiment of the present disclosure, in (3),
   the incoming lot inventory management module is configured to select a receiving location according to a predetermined rule.
(8) As an embodiment of the present disclosure, in any one of (1) to (7),
   a particle size of a brand classification is set based on input data acquired by the input information acquisition module.
(9) As an embodiment of the present disclosure, in any one of (1) to (8),
   the inventory management module for processing material inventory sites is configured to treat the processing material inventory sites as having a virtual bin for each brand and manage the inventory by reclaiming inventory according to dispatch jobs and replenishing inventory according to receiving jobs sent by the controller module.
(10) As an embodiment of the present disclosure, in any one of (1) to (9),
   the controller module is configured to execute a process to transfer a job being executed to another route in a case in which shutting down the job being executed and transferring the job to the other route would allow a job on standby to be executed simultaneously.
(11) A method of creating an operation plan according to an embodiment of the present disclosure includes:
   acquiring a simulation result from the logistics simulator device according to any one of (1) to (10); and
   causing the logistics simulator device to acquire an operation plan modified based on the simulation result and execute the simulation again in a case in which it is determined from the simulation result that the simulation has terminated abnormally.
(12) A program according to an embodiment of the present disclosure is
   a program configured to cause a computer to function as a logistics simulator device that simulates logistics for transporting materials to a subsequent process, the program causing the computer to function as:
   an input information acquisition module configured to acquire an equipment list, an incoming plan, inventory information, a material processing plan, an equipment capacity, and a start date and time, end date and time, and unit time of a simulation;
   a controller module configured to execute the simulation according to the start date and time, the end date and time, and the unit time of the simulation;
   a route module configured to connect facility elements in the simulation and search for a transportable route based on the equipment list and the equipment capacity; and
   a simulation result output module configured to output inventory trends and job results acquired at discrete time intervals, wherein
   the program is configured to cause the computer to function as an incoming port module, an incoming lot inventory management module, a processing material inventory site module, an inventory management module for processing material inventory sites, a processing equipment inventory site module, a processing equipment bin-type inventory site module, and a processing equipment module as optional components each provided with on/off control,
   the incoming port module is configured to generate one or more incoming ports and one or more incoming lots for processing materials according to the equipment list and the incoming plan,
   the incoming lot inventory management module is configured to generate a receiving job for one or more types of processing materials to be received in a processing material inventory site,
   the processing material inventory site module is configured to generate one or more processing material inventory sites according to the equipment list,
   the inventory management module for processing material inventory sites is configured to generate one or more processing material inventory site bins by brand within each processing material inventory site based on the inventory information, and increase or decrease inventory in the processing material inventory site bins,
   the processing equipment inventory site module is configured to generate two or more processing equipment inventory sites based on the equipment list, and increase or decrease inventory in the processing equipment inventory sites based on the material processing plan,
   the processing equipment bin-type inventory site module is configured to generate one or more processing equipment bin-type warehouses, which are collections of a plurality of bins, based on the equipment list, and consume or increase inventory in the processing equipment bin-type warehouses, and
   the processing equipment module is configured to generate processing equipment based on the equipment list and to process material in the simulation using the processing equipment according to the material processing plan.
(13) A method of operating steelworks according to an embodiment of the present disclosure is
   a method of operating a steelworks,
   the subsequent process being a process of blending raw materials to be charged into a blast furnace,
   the method including:
      acquiring an optimized operation plan, which is the operation plan in a case in which it is determined from the simulation result that the simulation has terminated normally in the method of creating an operation plan according to (11); and
      transporting the raw materials based on the optimized operation plan.

### (Advantageous Effect)

According to the present disclosure, a logistics simulator device, a method of creating an operation plan, a program, and an efficient method of operating a steelworks that can accommodate a wide variety of layouts and preconditions can be provided.

### BRIEF DESCRIPTION OF THE DRAWINGS

In the accompanying drawings:
FIG. 1 is a schematic diagram illustrating the logistics flow of iron ore and coking coal charged into a blast furnace;
FIG. 2 is a diagram illustrating a schematic configuration of a logistics simulator device including its relationship with a higher-level system;
FIG. 3 is a diagram illustrating a configuration of a simulation execution unit in the logistics simulator device; and
FIG. 4 is a schematic diagram of the layout of the logistics simulation target in the Examples.

### DETAILED DESCRIPTION

Hereinafter, a logistics simulator device, a method of creating an operation plan, a program, and a method of operating steelworks according to an embodiment of the present disclosure will be described with reference to the drawings.

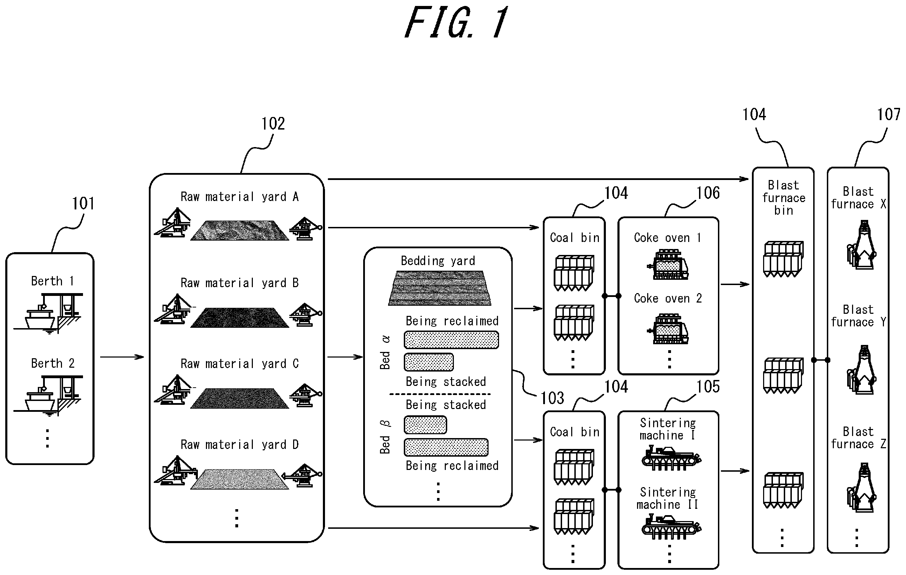

The logistics simulator device according to the present embodiment simulates the logistics of transporting materials (processing materials) to the subsequent process. Although the logistics targeted by the logistics simulator device are not limited, an example of logistics, carried out as part of the operation of a steelworks, for iron ore and coking coal in raw material yards 102 (see FIG. 1) is described in the present embodiment. In the iron and steel industry, iron ore, which is iron oxide, is charged into a blast furnace 107 (see FIG. 1) along with coke, is reduced, and is then refined to make steel. To promote a smooth reduction reaction in the blast furnace 107 and avoid problems, the sintered ore and coke produced must have a certain degree of strength and quality, and a large number of different iron ores and coking coals need to be blended. FIG. 1 illustrates the logistics flow of iron ore and coking coal.

The iron ore and coking coal are received from the berths 101 into the raw material yards 102 and stored in piles by brand. The raw material yards 102 are an example of inventory sites. The received iron ore and coking coal are dispatched to the bedding yard 103 and the blending bins 104, which are the subsequent process, and are blended to achieve a predetermined quality. The blending bin 104 includes an ore bin, provided in the sintering machine 105, for storing iron ore, a coal storage bin provided in the coke oven 106 for storing coking coal, and a blast furnace bin provided in the blast furnace 107. In the bedding yard 103, brands are blended by stacking them in pairs in a pile called a bed. When one of the beds is being stacked, the other is being reclaimed toward the sintering machine 105 or the coke oven 106, and by completing the stacking of the bed and switching it over before the reclaiming is completed, continuous reclaiming to the sintering machine 105 or the coke oven 106 is achieved. The blending bin 104 includes a plurality of silo-shaped bins, each capable of storing approximately 140 m³ of iron ore or coking coal. Various brands can be replenished into the plurality of bins and mixed on belt conveyors at the outlet while being reclaimed. The sintering machine 105 produces sintered ore by sintering and solidifying the powdered iron ore after blending. The coke oven 106 produces coke from coking coal. The blast furnace 107 produces pig iron by reducing lump ore sent from the bedding yard 103, sintered ore sent from the sintering machine 105, and processed ore and auxiliary materials sent from the raw material yard 102, using coke sent from the coke oven 106. In the logistics operations for iron ore and coking coal, the top priority is not to stop production in the downstream sintering machine 105, coke oven 106, and blast furnace 107. Therefore, receiving operations from the berths 101 to the raw material yards 102 are carried out as needed in between operations to discharge raw materials from the yard 102 to the subsequent process. The logistics simulator according to the present embodiment targets the logistics of iron ore and coking coal from the berths 101 to acceptance at the raw material yard 102, then to dispatching from the bedding yard 103 and blending bin 104, and finally to the blast furnace 107 via the sintering machine 105 or coke oven 106. Here, an iron ore and coking coal logistics line including both the bedding yard 103 and the blending bin 104 is targeted in the present embodiment, but the logistics line may include only the bedding yard 103 or the blending bin 104.

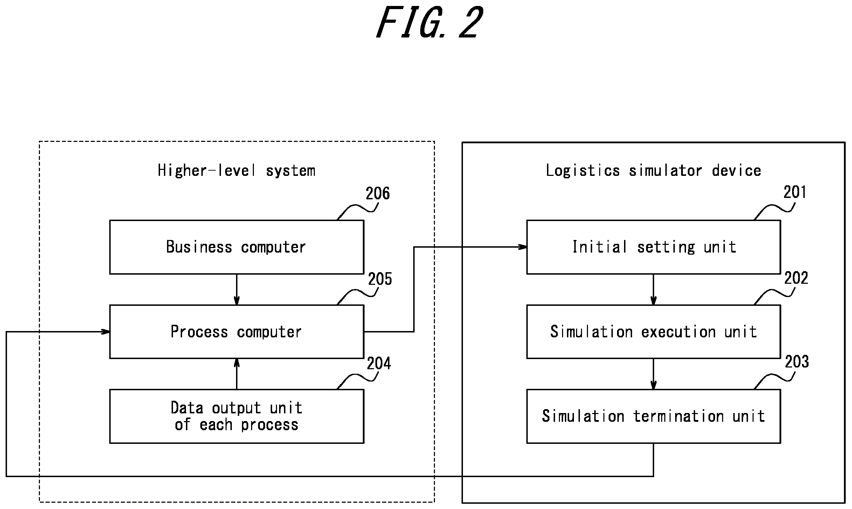

FIG. 2 is a diagram illustrating a schematic configuration of a logistics simulator device including its relationship with a higher-level system. The logistics simulator device includes an initial setting unit 201, a simulation execution unit 202, and a simulation termination unit 203. The higher-level system includes a data output unit 204 for each process, a process computer 205, and a business computer 206. The initial setting unit 201 of the logistics simulator device prepares data, initial parameters, and the like required for the simulation. The simulation execution unit 202 executes the simulation. The simulation termination unit 203 transmits the simulation results to the process computer 205. Data required for the simulation is acquired from the business computer 206 and the data output unit 204 of each process and is sent to the initial setting unit 201 via the process computer 205. Here, the data required for the simulation may be editable by the user of the logistics simulator device.

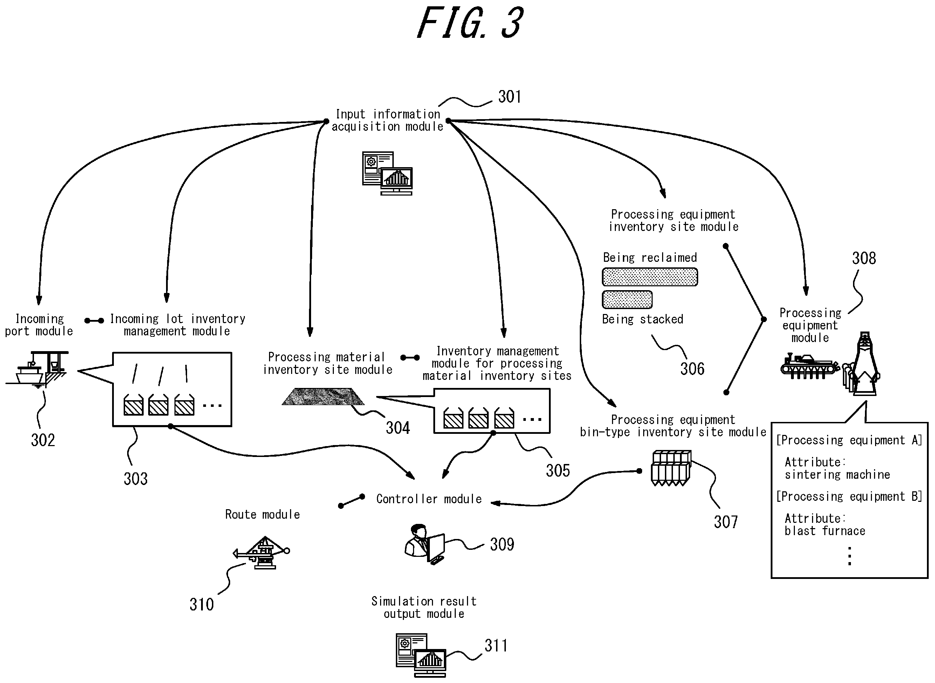

FIG. 3 is a diagram illustrating a configuration of the simulation execution unit 202 in the logistics simulator device. The arrows and lines in FIG. 3 indicate the flow and transmission/reception of data. The simulation execution unit 202 includes an input information acquisition module 301, a controller module 309, a route module 310, and a simulation result output module 311. Furthermore, the simulation execution unit 202 may include at least one of an incoming port module 302, an incoming lot inventory management module 303, a processing material inventory site module 304, an inventory management module for processing material inventory sites 305, a processing equipment inventory site module 306, a processing equipment bin-type inventory site module 307, and a processing equipment module 308. In other words, the simulation execution unit 202 includes, as optional components each provided with the below-described on/off control, the incoming port module 302, the incoming lot inventory management module 303, the processing material inventory site module 304, the inventory management module for processing material inventory sites 305, the processing equipment inventory site module 306, the processing equipment bin-type inventory site module 307, and the processing equipment module 308. Here, a module is a component that has the function of a device or facility simulated by the logistics simulator device and is configured to be easily added or replaced. In the present embodiment, the module is a program module in which input variables, output variables, and processing of the functions of the equipment or facilities to be simulated are defined.

The input information acquisition module 301 acquires an equipment list, an incoming plan, inventory information, a processing material processing plan, an equipment capacity, and a start date and time, end date and time, and unit time of a simulation, which are required for the simulation. The unit time is the step time in the simulation. The simulation execution unit 202 starts the simulation at the start date and time of the simulation. The input information acquisition module 301 may also acquire an equipment shutdown plan.

The incoming port module 302 generates one or more incoming ports (i.e., berths 101) and incoming lots (i.e., raw material vessels) of processing materials, according to the equipment list and incoming plan acquired by the input information acquisition module 301. When there is an available berth 101, the incoming port module 302 allows a waiting raw material vessel to enter and occupy the berth 101 and releases the occupied berth 101 once the processing materials on the raw material vessel are exhausted.

The incoming lot inventory management module 303 generates receiving jobs for receipt into the raw material yard 102 with respect to the one or more types of processing materials loaded on the raw material vessels, as generated by the incoming port module 302. The incoming lot inventory management module 303 outputs the generated receiving jobs to the controller module 309. Furthermore, the incoming lot inventory management module 303 manages the cargo volume of the raw material vessels for processing materials for which the receiving jobs are being executed. As used herein, the term "job" refers to work performed in an operation and may also be referred to as a "task". Jobs include receiving jobs, dispatch jobs, and emergency jobs.

The processing material inventory site module 304 generates one or more processing material inventory sites (i.e., raw material yards 102) according to the equipment list acquired by the input information acquisition module 301. Furthermore, the processing material inventory site module 304 sets the initial inventory and maximum inventory of the processing material inventory site based on the inventory information acquired by the input information acquisition module 301.

The inventory management module for processing material inventory sites 305 virtually generates one or more processing material inventory site bins by brand for each raw material yard 102, based on the inventory information acquired by the input information acquisition module 301. In other words, the processing material inventory site bin is a virtual bin in a processing material inventory site and is generated for each brand. Furthermore, the inventory management module for processing material inventory sites 305 receives receiving jobs for receipt into the raw material yard 102 and dispatch jobs to downstream processes as sent by the controller module 309 and manages the inventory in the processing material inventory site bins by increasing or decreasing the inventory.

The processing equipment inventory site module 306 generates two or more processing equipment inventory sites (i.e., bedding yards 103) based on the equipment list acquired by the input information acquisition module 301. Furthermore, the processing equipment inventory site module 306 sets the initial inventory for two or more bedding yards 103 according to the inventory information acquired by the input information acquisition module 301. At least one of the two or more bedding yards 103 is in the process of stacking. The processing equipment inventory site module 306 generates a dispatch job, according to the material processing plan acquired by the input information acquisition module 301, and outputs the generated dispatch job to the controller module 309. While the dispatch job to the bedding yard 103 is being executed, the processing equipment inventory site module 306 increases the inventory in the bedding yard 103. Furthermore, at least one of the other bedding yards 103 is being reclaimed. The processing equipment inventory site module 306 increases or decreases the inventory in the bedding yards 103 according to the material processing plan acquired by the input information acquisition module 301 or the material processing plan for the processing equipment generated by the processing equipment module 308.

The processing equipment bin-type inventory site module 307 generates one or more processing equipment bin-type warehouses (i.e., blending bins 104), which are collections of a plurality of bins, based on the equipment list acquired by the input information acquisition module 301. The processing equipment bin-type inventory site module 307 sets the maximum inventory and initial inventory for all blending bins 104 according to the inventory information acquired by the input information acquisition module 301. Furthermore, the processing equipment bin-type inventory site module 307 consumes the inventory in the blending bins 104 according to the material processing plan acquired by the input information acquisition module 301 or the material processing plan for the processing equipment generated by the processing equipment module 308. Here, in a case in which the inventory in a blending bin 104 falls below a predetermined threshold, the processing equipment bin-type inventory site module 307 generates a dispatch job for an appropriate amount from the raw material yard 102 to the blending bin 104. The processing equipment bin-type inventory site module 307 outputs the generated dispatch job to the controller module 309. While the dispatch job to the blending bin 104 is being executed, the processing equipment bin-type inventory site module 307 increases the inventory in the blending bin 104.

The processing equipment module 308 generates processing equipment (i.e., at least one of the sintering machine 105, coke oven 106, and blast furnace 107) based on the equipment list acquired by the input information acquisition module 301. The processing equipment module 308 processes the material using the processing equipment in the simulation according to the material processing plan acquired by the input information acquisition module 301 and produces sintered ore, coke, or pig iron. The attributes of the processing equipment are specified in the equipment list.

The controller module 309 executes the simulation according to the start date and time, the end date and time, and the unit time of the simulation as acquired by the input information acquisition module 301. More specifically, the controller module 309 acquires receiving jobs generated by the incoming lot inventory management module 303 and dispatch jobs generated by the processing equipment inventory site module 306 and the processing equipment bin-type inventory site module 307. The controller module 309 manages the receiving jobs and dispatch jobs for each discrete time interval in which they occur and searches for the route through which each job can be executed from connection relationships generated by the route module 310. In other words, the controller module 309 uses the route module 310 to search for a transportable route for the material. Based on logic set in advance, the controller module 309 selects a route from a plurality of route candidates that were found and executes the simulation using the selected route. Here, the route selection logic may be, for example, random selection according to random numbers, a method of using the oldest piles in the raw material yard 102 first, or a method of using the processing material inventory site bins with the least inventory.

The route module 310 connects each of the facility elements in the simulation, searches for a transportable route, and sets the movement capacity and the like of each facility element based on the equipment list and equipment capacity acquired by the input information acquisition module 301. The facility elements include the berth 101, the raw material yard 102, the bedding yard 103, the blending bin 104, the sintering machine 105, the coke oven 106, the blast furnace 107, a belt conveyor, a stacker-reclaimer, and a dump truck.

The simulation result output module 311 outputs inventory trends and job results acquired at discrete time intervals. The discrete time intervals are determined based on the start date and time, the end date and time, and the unit time of the simulation as acquired by the input information acquisition module 301. The job results refer to jobs that were completed by the deadline.

The simulation termination unit 203 checks whether predetermined termination conditions for the simulation are met, and if the termination conditions are met, terminates the simulation using the updated receiving plan and dispatch plan. If the termination conditions are not met, the simulation termination unit 203 advances the unit time by 1, returns to the processing of the simulation execution unit 202, and continues the simulation.

In the present embodiment, the logistics simulator device is configured by a computer, and the processor in the computer functions as each module according to a program. Some of the modules that constitute the logistics simulator device are optional and can be used selectively according to the equipment list included in the input data acquired by the input information acquisition module 301. This configuration allows for the handling of a wide variety of layouts and prerequisites. Specifically, the incoming port module 302, the incoming lot inventory management module 303, the processing material inventory site module 304, the inventory management module for processing material inventory sites 305, the processing equipment inventory site module 306, the processing equipment bin-type inventory site module 307, and the processing equipment module 308 are options. Each of these modules is provided with an on/off control. For example, if set to "1", i.e., on, the module is used, whereas if set to "0", i.e., off, the module is not used (see Table 9). The on/off control is set based on input data acquired by the input information acquisition module 301 to enable automatic setting of the facility elements. For example, when the incoming port module 302, the incoming lot inventory management module 303, the processing material inventory site module 304, and the inventory management module for processing material inventory sites 305 are turned off, the inventory in the raw material yard 102 is treated as unlimited, enabling a simulation focused on the dispatch operations from the raw material yard 102 onward. As another example, the coke oven 106 may be turned off in the processing equipment module 308, whereas only the sintering machine 105 and blast furnace 107 are turned on and added to the logistics flow, thereby enabling a simulation focused on the logistics of iron ore. Furthermore, settings can be made to match the configuration of the target steelworks by simply specifying whether there is a bedding yard 103, a blending bin 104, or the like in the equipment list, for example. The on/off control of the modules also eliminates the need for software modifications (coding) when the equipment list changes.

Details of the processing performed by the logistics simulator are described below, using the iron ore and coking coal logistics flow in FIG. 1 as an example. The incoming raw material vessels are given by data such as Table 1.

### [Table 1]

**(Table 1)**

| Raw material vessel | Brand | Receiving yard | Acceptance amount (t) | Arrival date and time |
|---|---|---|---|---|
| Vessel 1 | Brand a | Yard A | 20000 | 2023/4/1 15:00 |
| | Brand a | Yard B | 25000 | |
| | Brand b | Yard A | 30000 | |
| | Brand b | Yard B | 20000 | |
| | Brand b | Yard C | 20000 | |
| Vessel 2 | Brand c | Yard A | 10000 | 2023/4/8 21:30 |
| | Brand c | Yard B | 25000 | |
| | Brand c | Yard A | 30000 | |
| | Brand c | Yard B | 20000 | |
| | Brand c | Yard C | 20000 | |

Each row is defined as a receiving job, and when the arrival date and time of a vessel is reached, the controller module 309 sets an execution trigger (e.g., "1") for the receiving jobs associated with that vessel. Furthermore, if the incoming raw material vessel is not provided as data (i.e., an incoming plan) as in Table 1, the inventory management module for processing material inventory sites 305 generates incoming lots based on a predetermined rule. The predetermined rule could, for example, be to randomly generate a raw material ship carrying a particular brand when the inventory of that brand falls below a certain threshold. The receiving location is selected by the incoming lot inventory management module 303 according to a predetermined rule. For example, if there are sites for a received brand in a plurality of raw material yards 102, the material may be divided and received according to the ratio of the maximum capacities of the raw material yards 102. The receiving location may be randomly selected from among candidate locations that can receive the material. The handling volume for one lot of a receiving job is preferably determined according to the size of the hatch on the raw material vessel. Furthermore, the inventory management module for processing material inventory sites 305 may interrupt a job in a case in which the inventory in the processing material inventory site bin becomes full or insufficient during execution of the job, select another processing material inventory site bin according to a predetermined rule, and resume the job.

The processing equipment bin-type inventory site module 307 is defined by equipment-related input data as in Table 2.

### [Table 2]

**(Table 2)**

| Bin name | Brand | Place or destination | Maximum capacity (t) | Initial inventory (t) | Blend proportion (%) | Replenishment threshold (%) |
|---|---|---|---|---|---|---|
| Bin 01 | Brand o | Sintering machine I | 450 | 310 | 45 | 70 |
| Bin 02 | Brand p | Sintering machine I | 450 | 408 | 45 | 70 |
| Bin 03 | Brand q | Sintering machine I | 420 | 280 | 40 | 60 |
| Bin 04 | Brand r | Sintering machine I | 420 | 395 | 40 | 60 |
| Bin 05 | Brand s | Sintering machine I | 300 | 246 | 15 | 60 |
| Bin 06 | Brand d | Blast furnace X | 400 | 387 | 50 | 60 |
| Bin 07 | Brand d | Blast furnace X | 400 | 289 | 50 | 60 |
| Bin 08 | Brand e | Blast furnace X | 450 | 395 | 20 | 60 |
| Bin 09 | Brand f | Blast furnace X | 450 | 278 | 15 | 60 |
| Bin 10 | Brand g | Blast furnace X | 450 | 376 | 15 | 60 |

The blending bins 104 associated with a plurality of pieces of equipment can be configured using input data, eliminating the need for the user to code the relative positions of the equipment. The blending bins 104 are connected to a plurality of downstream pieces of equipment according to the facility layout and equipment information, and inventory is reclaimed according to the product of the processing efficiency of the equipment and the blend proportion of the brands. In a case in which inventory is reclaimed from a bin and falls below a replenishment threshold set by the input data, the processing equipment bin-type inventory site module 307 may employ logic to generate a dispatch job for dispatch to the bin and send the dispatch job to the controller module 309.

In the bedding yard 103, a plurality of brands are stacked in layers and blended together. If the generation of a dispatch job to the bedding yard 103 is specified for a plurality of lots using input data, detailed specifications will be required, making the input data complicated. If detailed specifications are omitted, there is a risk that the plurality of brands will not be stacked as expected by the user. The processing equipment inventory site module 306 defines virtual bins in the generation of the bedding yard 103 according to the input data in Table 3.

### [Table 3]

**(Table 3)**

| Virtual bin name | Brand | Bed name | Destination | Maximum capacity (t) | Stacking amount (t) | Blend proportion (%) | Replenishment threshold (%) |
|---|---|---|---|---|---|---|---|
| Bin-b-01 | Brand a | Bed β | Sintering machine I | 1800 | 70000 | 30 | 40 |
| Bin-b-02 | Brand b | Bed β | Sintering machine I | 1200 | 70000 | 20 | 40 |
| Bin-b-03 | Brand c | Bed β | Sintering machine I | 1200 | 70000 | 20 | 40 |
| Bin-b-04 | Brand d | Bed β | Sintering machine I | 900 | 70000 | 15 | 40 |
| Bin-b-05 | Brand e | Bed β | Sintering machine I | 900 | 70000 | 15 | 40 |
| Bin-b-06 | Brand A | Bed α | Blast furnace X | 3000 | 55000 | 30 | 40 |
| Bin-b-07 | Brand B | Bed α | Blast furnace X | 3000 | 55000 | 30 | 40 |
| Bin-b-08 | Brand C | Bed α | Blast furnace X | 2000 | 55000 | 20 | 40 |
| Bin-b-09 | Brand D | Bed α | Blast furnace X | 2000 | 55000 | 20 | 40 |

The processing equipment inventory site module 306, like the processing equipment bin-type inventory site module 307, reclaims inventory according to the product of the processing efficiency of the processing equipment designated as the destination and the blend proportion of the brands. The processing equipment inventory site module 306 can use logic to generate a dispatch job to a virtual bin when the inventory falls below the replenishment threshold and can simulate a state in which different brands are stacked in sequence, just like in actual operation. There is no limit to the maximum capacity of the virtual bin, but since the bedding yard 103 employs open-stockpile blending, the capacity is greater than the amount reclaimed to an actual blending bin 104. Hence, the capacity may be set greater than that of an actual blending bin 104. Furthermore, the initial inventory of the virtual bin may be set to 0. By treating the bedding yard 103 as being configured virtually as a large number of bins refilled with various brands, the bedding yard 103 can be handled in the same way as the blending bins 104. In other words, the bedding yard 103 and the blending bins 104 can be treated as a common facility element in the simulation. This enables the processing equipment inventory site module 306 to manage inventory increases and decreases and create dispatch plans more efficiently.

Furthermore, the bedding yard 103 is composed of sets of beds, with one bed being stacked and blended while the other bed is being reclaimed to processing equipment in subsequent processes. When one of the beds has been emptied, reclaiming is performed from the stacked bed, and stacking begins on the emptied bed. The blend proportion and planned stacking amount can be changed each time the bed is switched. For example, as in the data for the same bed number in Table 4, the stacking amount, brand, blend proportion, and the like may be changed. If the next bed is not completed before the bed being reclaimed is emptied, the simulation may be terminated as an abnormal termination.

### [Table 4]

**(Table 4)**

| Bed number | Bed name | Stacking amount (t) | Brand 1 | Blend proportion (%) | Brand 2 | Blend proportion (%) |
|---|---|---|---|---|---|---|
| 1 | Bed β | 70000 | Brand a | 30 | Brand b | 30 |
| 2 | Bed β | 65000 | Brand a | 20 | Brand b | 40 |
| 3 | Bed β | 68000 | Brand a | 20 | Brand b | 30 |
| 4 | Bed β | 70000 | Brand a | 15 | Brand b | 30 |
| 5 | Bed β | 69000 | Brand a | 15 | Brand b | 15 |
| 1 | Bed α | 55000 | Brand A | 30 | Brand B | 20 |
| 2 | Bed α | 48000 | Brand A | 30 | Brand B | 15 |
| 3 | Bed α | 50000 | Brand A | 20 | Brand B | 20 |
| 4 | Bed α | 49000 | Brand A | 20 | Brand B | 30 |

The controller module 309 arranges the receiving jobs and dispatch jobs sent from each module in order of priority, as in Table 5. The controller module 309 may create a list that prioritizes the urgent jobs at the top of the list via interrupts. Completed jobs are removed from the list.

### [Table 5]

**(Table 5)**

| Priority of implementation | Brand | Workload (t) | From | To | Implementation status | Urgency | Issuance date and time |
|---|---|---|---|---|---|---|---|
| | Brand a | 5,000 | Berth 1 | Yard C | Done | | 6/8 16:00 |
| | Brand b | 6,000 | Berth 1 | Yard B | Done | | 6/8 16:00 |
| 1 | Brand a | | Yard B | Sintering machine II | In progress | 1 | 6/13 14:50 |
| 2 | Brand b | | Yard A | Sintering machine I | In progress | | 6/13 11:15 |
| 3 | Brand b | | Yard A | Bed α | Wait | | 6/13 14:12 |
| 4 | Brand a | | Yard B | Bed β | Interrupted | | 6/13 14:38 |
| 5 | Brand a | 8,000 | Berth 2 | Yard C | In progress | | 6/12 12:00 |
| 6 | Brand a | 5,000 | Berth 2 | Yard A | Wait | | 6/12 12:00 |
| 7 | Brand b | 6,000 | Berth 2 | Yard C | Wait | | 6/12 12:00 |

The priority of implementation in Table 5 indicates the priority of each job, with "1" being the highest priority. The issuance date and time indicate the date and time the job was created. Receiving jobs are created when the vessel arrives at port. The list displays jobs by priority of implementation. The priority of implementation is determined regardless of precedence of the issuance date and time. In other words, an earlier issuance date and time does not necessarily imply a higher priority of implementation. The source and destination of a job are indicated in the "From" and "To" columns, respectively. The "implementation status" item indicates, for the corresponding job in the row, "Done" for a completed job, "In progress" for a job in progress, and "Wait" for a job on standby. Further details regarding the implementation status are provided later. The "Urgency" item is set to "1" to indicate an urgent job. Here, a specific numerical value is listed for the workload, since the workload is given in the input data for receiving jobs. In contrast, for a dispatch job, the workload until the dispatch destination (for example, the blending bin 104) becomes full would be listed. However, since reclaiming may occur at the dispatch destination even while replenishment is underway, the workload is not specified, and no concrete numerical value is listed.

The controller module 309 executes jobs that can be run simultaneously in parallel. The controller module 309 prioritizes execution of urgent jobs and gives priority to dispatch jobs over receiving jobs. Furthermore, the controller module 309 puts a job on standby if the job cannot be executed due to conflict with a job already being executed. In the example in Table 5, the seventh job from the top is interrupted and suspended by an urgent job (the fourth job from the top), and the "Implementation" column indicates "Interrupted". Furthermore, in the example in Table 5, the third job from the top was removed from the list before execution because an urgent job to dispatch the same brand to the same location arose, and the "Implementation" column indicates "Delete". The controller module 309 may execute a process to transfer a job being executed to another route in a case in which shutting down the job being executed and transferring the job to the other route would allow a job on standby to be executed simultaneously, thereby achieving efficient operation.

Here, the particle size of the brand classification can be set using the input data. For example, specific brands such as brand A and brand B can be designated for blending as raw materials. Furthermore, the blend can be set using higher-level brand classifications, such as South American ore X (corresponding to brands A and B) and Australian ore Y (corresponding to brands a and b). In the logistics operations of iron ore and coking coal, the brand names of the smallest classifications are frequently changed. Therefore, while data editing has been cumbersome in conventional simulations, the logistics simulator device of the present disclosure enables flexible handling through configuration of input data.

The initial inventory for the processing inventory sites is given per yard and per brand, as in Table 6. The inventory management module for processing material inventory sites 305 treats the raw material yard 102 as having a virtual bin for each brand and manages the inventory by reclaiming inventory according to dispatch jobs and replenishing inventory according to receiving jobs sent by the controller module 309.

### [Table 6]

**(Table 6)**

| Yard name | Brand | Initial inventory (t) |
|---|---|---|
| Yard A | Brand a | 5000 |
| Yard A | Brand b | 8000 |
| Yard A | Brand c | 20000 |
| Yard A | Brand A | 10000 |
| Yard B | Brand d | 10000 |
| Yard B | Brand e | 8000 |
| Yard B | Brand B | 48000 |
| Yard C | Brand a | 20000 |
| Yard C | Brand C | 30000 |
| : | : | : |

In a case in which an equipment shutdown plan is provided as input data as in Table 7, the controller module 309 shuts down the corresponding equipment when the simulator discrete time reaches the time of equipment shutdown, based on the equipment shutdown plan. In a case in which equipment involved in transport or movement, such as a belt conveyor or a stacker-reclaimer (an example of a mobile machine), shuts down, the route module 310 may search for the transportable route while excluding routes that pass through the equipment that is shut down. This makes it possible to search for transportable routes while excluding routes that include facility elements scheduled to be shut down for maintenance or other reasons. The controller module 309 may terminate the simulation as an abnormal termination in a case in which there are brands that cannot be dispatched or received without using equipment that is shut down.

### [Table 7]

**(Table 7)**

| Equipment shutdown | Start date and time | End date and time |
|---|---|---|
| BC201 | 2023/4/1 10:00 | 2023/4/1 15:00 |
| SR2 | 2023/4/1 10:00 | 2023/4/1 15:00 |
| UL1 | 2023/4/3 10:00 | 2023/4/5 10:00 |
| : | : | : |

In Table 7, "BC201" represents a single belt conveyor. "SR2" represents a single stacker-reclaimer. "UL1" represents a single vessel.

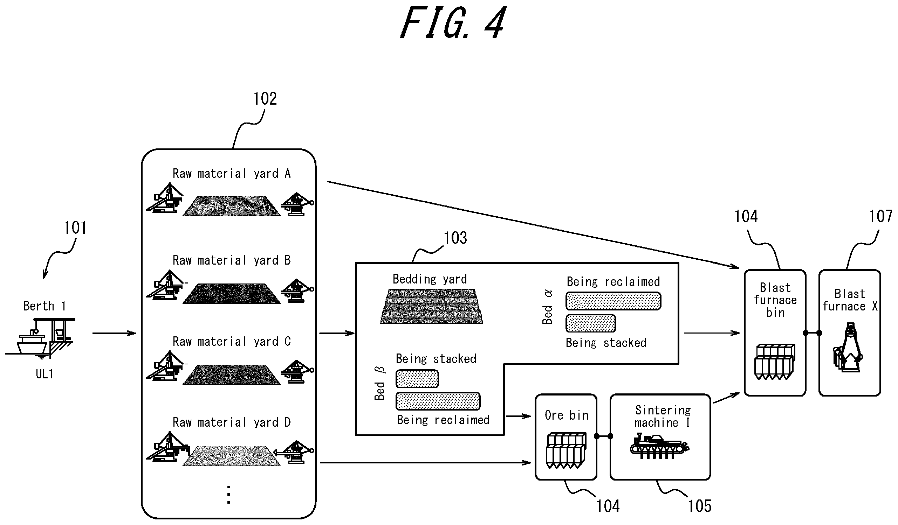

FIG. 4 is a schematic diagram of the layout of the logistics simulation target in the Examples. In addition to the input data exemplified in Tables 1 to 7 above, the equipment list, on/off control of modules by the master included in the input data, equipment capacity, and the like exemplified in Tables 8 to 10 are also used.

### [Table 8]

**(Table 8)**

| Equipment name | Attribute |
|---|---|
| Berth 1 | Berth |
| UL1 | UL |
| Yard A | Yard |
| Yard B | Yard |
| Yard C | Yard |
| Yard D | Yard |
| Bed α | Bed |
| Bed β | Bed |
| Sintering machine I | SP |
| Blast furnace X | BF |
| BC101 | BC |
| SR1 | SR |
| : : | |

### [Table 9]

**(Table 9)**

| Master | On/Off |
|---|---|
| Ship Sailing | 1 |
| Blast Furnace | 1 |
| Sinter Plant | 1 |
| Coke Oven | 0 |
| Bed Blending | 1 |
| Bed to SP | 1 |
| Bed to CO | 0 |
| SP to BF | 1 |
| CO to BF | 0 |

### [Table 10]

**(Table 10)**

| Equipment name | Date | Production volume (t) |
|---|---|---|
| Sintering machine I | 2023/4/1 | 10000 |
| Sintering machine I | 2023/4/2 | 12000 |
| Sintering machine I | 2023/4/3 | 11500 |
| Sintering machine I | 2023/4/4 | 10500 |
| Sintering machine I | 2023/4/5 | 10000 |
| Sintering machine I | 2023/4/6 | 11000 |
| Sintering machine I | 2023/4/7 | 12500 |
| Sintering machine I | 2023/4/8 | 12000 |
| Sintering machine I | 2023/4/9 | 11500 |
| Sintering machine I | 2023/4/10 | 11000 |
| Sintering machine I | 2023/4/11 | 10500 |
| : | : | : |

In Table 8, "UL1" represents a single vessel. "BC101" represents a single belt conveyor. "SR1" represents a single stacker-reclaimer. In Table 9, as described above, an entry is used if the On/off item is set to "1" and not used if the On/off item is set to "0". For example, if "Coke Oven" is set to "0", then in the simulation, the coke oven 106 is set to "absent". In this way, simply by editing the input data, the number of berths 101 and pieces of cargo handling equipment, the number of yards, the number of beds, the number of sintering machines 105 and blast furnaces 107, the presence or absence of coke ovens 106, the correspondence between beds, sintering machines 105, and blast furnaces 107, the operating status and production capacity of each piece of equipment, and the like can be set. Furthermore, equipment conflict relationships can be incorporated into the input data in accordance with FIG. 4.

Referring again to FIG. 2, the simulation termination unit 203 terminates the simulation when preset termination conditions are reached. The termination conditions may include, for example, when the end date and time of the simulation as acquired by the input information acquisition module 301 is reached, or when the inventory in the bedding yards 103 or the blending bins 104 becomes insufficient. When the simulation is finished, the simulation results are output. The simulation results may include a flag indicating whether the job has terminated normally or abnormally, the actual receiving job results, the actual dispatch job results, and the like. Here, normal termination means that the simulation has terminated with the materials being transported without any shortage of inventory or the like. On the other hand, abnormal termination means that the simulation has terminated with an abnormality, such as a shortage of inventory or a dispatch job that was not completed by the end date and time. Trend information may also be output as the simulation results. The trend information may, for example, include changes in inventory in the bedding yards 103 and changes in inventory in the blending bins 104.

Information on inventory trends and the like may be output until the simulation is completed. For example, even if a simulation terminates abnormally, the contents of an alert can be confirmed in the higher-level system while viewing information such as inventory trends, and the input data such as the operation plan and inventory site plan can be corrected. Here, the operation plan includes the material processing plan acquired by the input information acquisition module 301. In the present embodiment, the material processing plan includes a plan for the production volume and composition of pig iron produced by sintered ore, coke, or the blast furnace 107. The material processing plan specifies the amount of the iron source supply, and its breakdown, necessary to realize the steel product production plan at the steelworks. The operation plan may take the steel product production plan into account as well. Furthermore, the operation plan may include the incoming plan. A subsequent simulation using modified input data is expected to produce good results. Furthermore, the logistics simulator device can transmit the operation plan for when a good result is obtained (when the simulation has terminated normally), together with related simulation data, to the higher-level system via the process computer 205.

For example, a method of creating an operation plan that includes acquiring a simulation result from the logistics simulator device, for example, may be executed. The method of creating an operation plan may include causing the logistics simulator device to acquire the operation plan modified based on the simulation result and execute the simulation again in a case in which it is determined from the simulation result that the simulation has terminated abnormally. For example, the method of creating an operation plan may be performed in the higher-level system. Furthermore, in the method of creating an operation plan, a method of operating a steelworks may be executed, the method including acquiring an optimized operation plan, which is the operation plan in a case in which it is determined from the simulation result that the simulation has terminated normally, and transporting raw materials based on the optimized operation plan. Specifically, the method of operating a steelworks may include controlling the transportation of each raw material by issuing instructions such as transport amounts, via the process computer 205, to control equipment that controls the transport of the respective raw materials. Here, the raw materials to be transported are raw materials to be blended in a subsequent process and charged into the blast furnace 107. The raw materials include the iron ore and the coking coal of the present embodiment but are not limited to iron ore and coking coal. For example, the blended raw materials also include auxiliary raw materials, and the concept of the present embodiment can also be applied to such auxiliary raw materials.

As described above, the logistics simulator device, method of creating an operation plan, and program according to the present embodiment can represent various simulations simply by combining modules and editing input data and can therefore accommodate a wide variety of layouts and preconditions. Furthermore, compared to conventional techniques, the development time for logistics simulator devices or programs can be significantly reduced. By following the operation plan for the case in which such a simulation is terminated normally, an efficient method of operating a steelworks also becomes possible. Furthermore, by appropriately managing the inventory of each raw material brand, raw materials of uniform quality can be supplied consistently, which contributes to the production of high-quality steel materials.

While embodiments according to the present disclosure have been described with reference to the drawings and examples, it should be noted that various modifications and amendments may easily be implemented by those skilled in the art based on the present disclosure. Accordingly, such modifications and amendments are included within the scope of the present disclosure. For example, functions or the like included in each component, each step, or the like can be rearranged without logical inconsistency, and a plurality of components, steps, or the like can be combined into one or divided. An embodiment according to the present disclosure may also be realized as a storage medium (for example, a non-transitory computer-readable recording medium) having recorded thereon a program to be executed by a processor included in an apparatus. Such embodiments are also to be understood as included in the scope of the present disclosure.

### REFERENCE SIGNS LIST

- 101: Berth

- 102: Raw material yard
- 103: Bedding yard
- 104: Blending bin
- 105: Sintering machine
- 106: Coke oven
- 107: Blast furnace
- 201: Initial setting unit
- 202: Simulation execution unit
- 203: Simulation termination unit
- 204: Data output unit for each process
- 205: Process computer
- 206: Business computer
- 301: Input information acquisition module
- 302: Incoming port module
- 303: Incoming lot inventory management module
- 304: Processing material inventory site module
- 305: Inventory management module for processing material inventory sites
- 306: Processing equipment inventory site module
- 307: Processing equipment bin-type inventory site module
- 308: Processing equipment module
- 309: Controller module
- 310: Route module
- 311: Simulation result output module

## Claims

1. A logistics simulator device that simulates logistics for transporting materials to a subsequent process, the logistics simulator device comprising:
an input information acquisition module configured to acquire an equipment list, an incoming plan, inventory information, a material processing plan, an equipment capacity, and a start date and time, end date and time, and unit time of a simulation;
a controller module configured to execute the simulation according to the start date and time, the end date and time, and the unit time of the simulation;
a route module configured to connect facility elements in the simulation and search for a transportable route based on the equipment list and the equipment capacity; and
a simulation result output module configured to output inventory trends and job results acquired at discrete time intervals, wherein
the logistics simulator device further comprises, as optional components each provided with on/off control, an incoming port module, an incoming lot inventory management module, a processing material inventory site module, an inventory management module for processing material inventory sites, a processing equipment inventory site module, a processing equipment bin-type inventory site module, and a processing equipment module,
the incoming port module is configured to generate one or more incoming ports and one or more incoming lots for processing materials according to the equipment list and the incoming plan,
the incoming lot inventory management module is configured to generate a receiving job for one or more types of processing materials to be received in a processing material inventory site,
the processing material inventory site module is configured to generate one or more processing material inventory sites according to the equipment list,
the inventory management module for processing material inventory sites is configured to generate one or more processing material inventory site bins by brand within each processing material inventory site based on the inventory information, and increase or decrease inventory in the processing material inventory site bins,
the processing equipment inventory site module is configured to generate two or more processing equipment inventory sites based on the equipment list, and increase or decrease inventory in the processing equipment inventory sites based on the material processing plan,
the processing equipment bin-type inventory site module is configured to generate one or more processing equipment bin-type warehouses, which are collections of a plurality of bins, based on the equipment list, and consume or increase inventory in the processing equipment bin-type warehouses, and
the processing equipment module is configured to generate processing equipment based on the equipment list and to process material in the simulation using the processing equipment according to the material processing plan.

2. The logistics simulator device according to claim 1, wherein the on/off control is set based on input data acquired by the input information acquisition module to enable automatic setting of the facility elements.

3. The logistics simulator device according to claim 1 or 2, wherein the incoming lot inventory management module is configured to generate the incoming lots based on a predetermined rule in a case in which no incoming plan is provided.

4. The logistics simulator device according to any one of claims 1 to 3, wherein the two or more processing equipment inventory sites are sets of beds, and when one of the beds has been emptied, reclaiming is performed from a stacked bed, and stacking begins on the emptied bed.

5. The logistics simulator device according to any one of claims 1 to 4, wherein the inventory management module for processing material inventory sites is configured to interrupt a job in a case in which the inventory in the processing material inventory site bin becomes full or insufficient during execution of the job, select another processing material inventory site bin according to a predetermined rule, and resume the job.

6. The logistics simulator device according to any one of claims 1 to 5, wherein
the input information acquisition module is configured to acquire an equipment shutdown plan, and
the controller module is configured to shut down corresponding equipment when a simulator discrete time reaches a time of equipment shutdown, based on the equipment shutdown plan.

7. The logistics simulator device according to claim 3, wherein the incoming lot inventory management module is configured to select a receiving location according to a predetermined rule.

8. The logistics simulator device according to any one of claims 1 to 7, wherein a particle size of a brand classification is set based on input data acquired by the input information acquisition module.

9. The logistics simulator device according to any one of claims 1 to 8, wherein the inventory management module for processing material inventory sites is configured to treat the processing material inventory sites as having a virtual bin for each brand and manage the inventory by reclaiming inventory according to dispatch jobs and replenishing inventory according to receiving jobs sent by the controller module.

10. The logistics simulator device according to any one of claims 1 to 9, wherein the controller module is configured to execute a process to transfer a job being executed to another route in a case in which shutting down the job being executed and transferring the job to the other route would allow a job on standby to be executed simultaneously.

11. A method of creating an operation plan, comprising:
acquiring a simulation result from the logistics simulator device according to any one of claims 1 to 10; and
causing the logistics simulator device to acquire an operation plan modified based on the simulation result and execute the simulation again in a case in which it is determined from the simulation result that the simulation has terminated abnormally.

12. A program configured to cause a computer to function as a logistics simulator device that simulates logistics for transporting materials to a subsequent process, the program causing the computer to function as:
an input information acquisition module configured to acquire an equipment list, an incoming plan, inventory information, a material processing plan, an equipment capacity, and a start date and time, end date and time, and unit time of a simulation;
a controller module configured to execute the simulation according to the start date and time, the end date and time, and the unit time of the simulation;
a route module configured to connect facility elements in the simulation and search for a transportable route based on the equipment list and the equipment capacity; and
a simulation result output module configured to output inventory trends and job results acquired at discrete time intervals, wherein
the program is configured to cause the computer to function as an incoming port module, an incoming lot inventory management module, a processing material inventory site module, an inventory management module for processing material inventory sites, a processing equipment inventory site module, a processing equipment bin-type inventory site module, and a processing equipment module as optional components each provided with on/off control,
the incoming port module is configured to generate one or more incoming ports and one or more incoming lots for processing materials according to the equipment list and the incoming plan,
the incoming lot inventory management module is configured to generate a receiving job for one or more types of processing materials to be received in a processing material inventory site,
the processing material inventory site module is configured to generate one or more processing material inventory sites according to the equipment list,
the inventory management module for processing material inventory sites is configured to generate one or more processing material inventory site bins by brand within each processing material inventory site based on the inventory information, and increase or decrease inventory in the processing material inventory site bins,
the processing equipment inventory site module is configured to generate two or more processing equipment inventory sites based on the equipment list, and increase or decrease inventory in the processing equipment inventory sites based on the material processing plan,
the processing equipment bin-type inventory site module is configured to generate one or more processing equipment bin-type warehouses, which are collections of a plurality of bins, based on the equipment list, and consume or increase inventory in the processing equipment bin-type warehouses, and
the processing equipment module is configured to generate processing equipment based on the equipment list and to process material in the simulation using the processing equipment according to the material processing plan.

13. A method of operating a steelworks,
the subsequent process being a process of blending raw materials to be charged into a blast furnace,
the method comprising:
acquiring an optimized operation plan, which is the operation plan in a case in which it is determined from the simulation result that the simulation has terminated normally in the method of creating an operation plan according to claim 11; and
transporting the raw materials based on the optimized operation plan.
